# EUROPEAN PATENT APPLICATION

(11) **EP 2 180 359 A1**
(43) Date of publication of application: **28.04.2010**
(21) Application number: 09174048.0
(22) Date of filing: 26.10.2009
(51) Int. Cl.: G02B 6/00

(54) **Illumination device**

(30) Priority: 27.10.2008 JP 2008275369
(71) Applicant: USHIO DENKI KABUSHIKI KAISYA, Tokyo-to, 100-0004 (JP)
(72) Inventor: Kamei, Koichi, Hyogo-ken (JP); Hata, Hiroshige, Hyogo-ken (JP); Kabuki, Kiyoyuki, Hyogo-ken (JP); Yano, Kazuaki, Hyogo-ken (JP); Yokokawa, Yoshihisa, Hyogo-ken (JP)
(74) Representative: Schlauch, Michael

(57) **Abstract**

An illumination device is provided. The illumination device includes: a light guide comprising: an outer peripheral face; one end face; and the other end face, wherein a groove is formed in the outer peripheral face along a longitudinal direction of the light guide; a light source provided to face the one end face of the light guide; and a diffusion reflector provided to face the other face of the light guide.

## Description

This application claims priority from Japanese Patent Application No. 2008-27 5369, filed on Oct. 27, 2008, the entire contents of which are hereby incorporated by reference.

### BACKGROUND OF THE INVENTION

### Technical Field

The present disclosure relates to an illumination device. More particularly, the present disclosure relates to an illumination device used for an illumination light source of an image reading device used for a facsimile, a copy machine, an image scanner, a barcode reader, and the like, or an illumination device used for an edge illumination light source of a back light using a light guide of a liquid crystal panel.

### Related Art

An illumination device of an image reading device such as a personal facsimile has been described in JP-A-62-237403. The illumination device described in FIG. 3 of JP-A-62-237403 includes a cylindrical light guide and a light source provided at one longitudinal end of the light guide, and a halogen lamp is used as the light source.

Recently, to improve output power of a light emitting diode (LED) in an image reading device such as a personal facsimile, an LED with a small size and low power consumption has been used as a light source of an illumination device (*see* e.g., JAP-AT 11-084137).

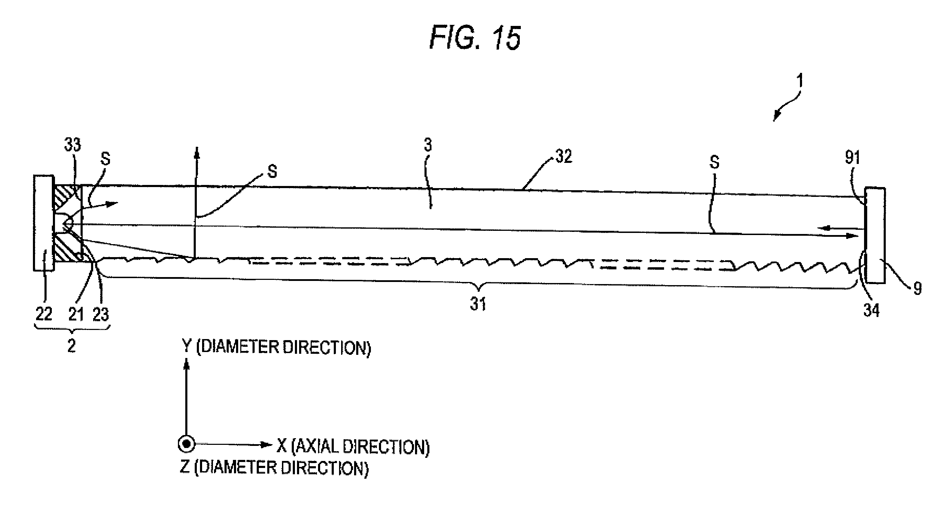

FIG. 15 is a diagram illustrating an illumination device 1 according to the related art, and is a cross-sectional view taken along a longitudinal direction of a cylindrical light guide 3.
The illumination device 1 includes: a cylindrical light guide 3; a light source 2 (LED) provided to face one longitudinal end face 33 of the light guide 3; and a reflector 9 having a reflection face 91 and provided such that the reflection face 91 faces the other longitudinal end face 34 of the light guide 3.
The light guide 3 is provided with a groove 31 on an outer peripheral face extending along the longitudinal direction. An incision direction of the groove 31 is perpendicular to an axial direction of the light guide 3.

The light source 2 includes: a light emitting element (not shown) placed on a substrate 22, a hemispherical sealant 23 for sealing an outer periphery thereof; and a reflection mirror 21 provided to surround the sealant 23 (*see* FIG. 16 of JP-A-11-084137).
Light S emitted from the light emitting element (not shown) penetrates the transparent sealant 23, is output toward one end face 33 of the light guide 3, and is introduced from the one end face 33 of the light guide 3 to the inside of the light guide 3. At that time, a part of the light penetrating the sealant 23 travels toward a reflection mirror 21 of the light source 2, and is reflected by the reflection mirror 21 and then travels toward the one end face 33 of the light guide 3. Accordingly, the light reflected by the reflection mirror 21 is also introduced from the one end face 33 of the light guide 3 to the inside of the light guide 3. The light S introduced into the light guide 3 is repeatedly reflected in the light guide 3, is reflected by an inclined face of the groove 31, and is output from a light output face 32 opposed to the groove 31 of the light guide 3.
As described above, the outgoing light S is output from the light output face 32 of the light guide 3 along the longitudinal direction of the light guide 3 in a linear shape.
Some of the light S emitted from the light source 2 is not output from the light output face 32 of the light guide 3 but reaches the other longitudinal end face 34 of the light guide 3. The light reaching the other end face 34 of the light guide 3 is specularly reflected by a reflection face 91 facing the other end face 34 of the light guide 3, and is introduced into the light guide 3 again.

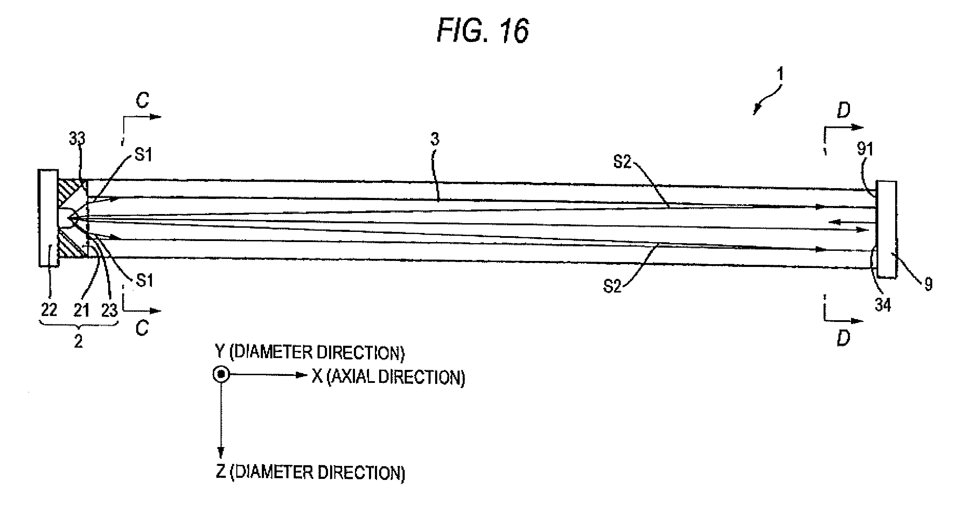

In the related-art illumination device 1 used for an image reading device, an electronic light receiving element (not shown) such as a CCD sensor is used, and linear-shaped outgoing light S emitted from the illumination device 1 is received by the electronic light receiving element (not shown).
However, when the linear-shaped outgoing light S emitted from the illumination device 1 is received by the electronic light receiving element (not shown), the illuminance distribution of the linear-shaped outgoing light S is changed. As described in Paragraph [0004] of Japanese Patent Publication No. 2994148, this is because a reading position of the electronic light receiving element (not shown) may deviate in a direction perpendicular to an axial direction of the light guide 3 and thus the illuminance distribution is changed by the deviation of the reading position. Specifically, the reason will be now described with reference to FIGS. 16 to 17B.

FIG. 16 is a top view of the illumination device 1 shown in FIG 15 as viewed from the light output face 32 side. FIG 17A and FIG 17B are cross-section views of a face perpendicular to the axial direction of the illumination device 1 shown in FIG. 16.
FIG. 17A is a cross-sectional view taken along the line C-C shown in FIG. 16, and FIG. 17B is a cross-sectional view taken along the line D-D shown in Fig. 16.

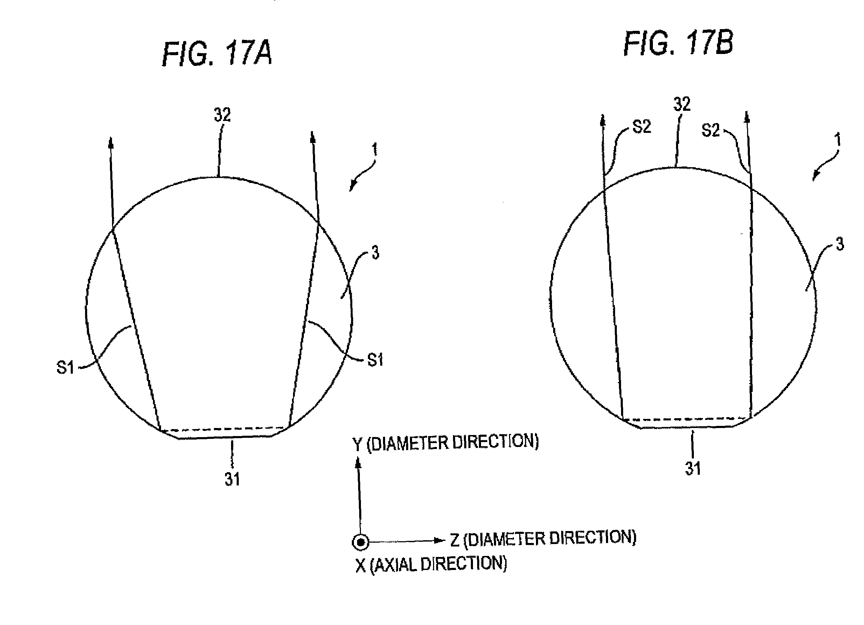

In FIG. 16 and FIGS. 17A and 17B, the same reference numerals and signs are given to the same elements as those shown in FIG. 15.

The illumination device 1 is provided with the light source 2 only at one end side 33 of the light guide 3. For this reason, in the light S output from the light output face 32 of the light guide 3, as shown in FIG. 16, the light from the one end side 33 is guided in the light guide 3, and is output in a linear shape to extend from the one end side 33 of the light guide 3 to the other end side 34 of the light guide 3. At that time, the light S guided into the light guide 3 has light S1 having a large angle component with respect to the axial direction of the light guide 3 on the one end side 33 of the light guide 3. When the light is reflected by the groove 31, the spread light S1 shown in FIG. 17A is output from the light output face 32.
However, most of the light S1 having the large angle component with respect to the axial direction of the light guide 3 in the light S is output from the light output face 32 between the one end side 33 and the center portion of the light guide 3, or is refracted on the side face (face between the light output face 32 and the groove 31 in the outer peripheral face of the light guide 3) of the light guide 3, and thus an angle component thereof is changed. For this reason, the light S reaching the other end side 34 of the light guide 3 only becomes light S2 having a small angle component with respect to the axial direction of the light guide 3. Naturally, the light S reflected by the reflector 9 provided on the other end side 34 of the light guide 3 is also the light S2 having the small angle component. That is, the light S is specularly reflected by the reflector 9, and thus the light reflected by the reflector 9 is the light S2 having the small angle component. Therefore, as shown in FIG. 17B, the spread of the light S output from the light output face 32 on the other end side 34 of the light guide 3 becomes smaller than that on the one end side 33.

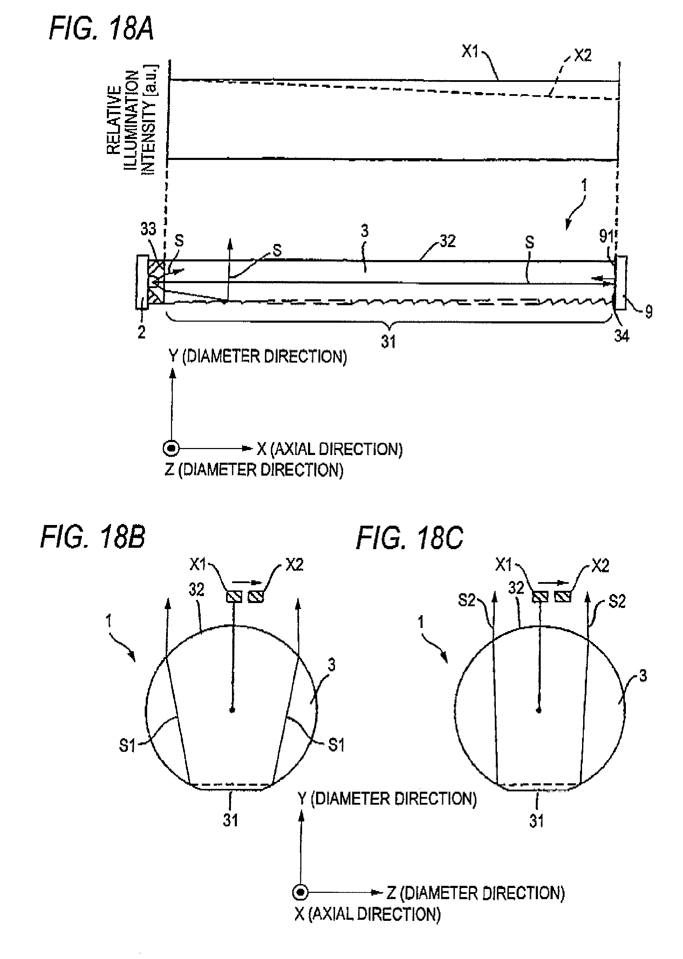

As described above, in the related-art illumination device 1, the illuminance distribution of the cross section on the one longitudinal end side 33 is different from the illuminance distribution on the other end side 34. For this reason, when the linear-shaped light output from the light guide 3 is read along the longitudinal direction by the electronic light receiving element (not shown), the illuminance distribution read along the center axis is different from the illuminance distribution at a position where the reading position of the electronic light receiving element deviates from the center in the transverse direction (Z-axis direction). This point will be now described with reference to FIGS. 18A to 18C.
FIG. 18A shows the illumination device 1 shown in FIG. 15, on the lower side of the figure, and shows a measurement result of the relative illumination intensity read by the electronic light receiving elements X1 and X2 along the longitudinal direction of the illumination device 1, on the upper side of the figure. FIG. 18B and FIG 18C are the same as the cross sections of FIG. 17A, and FIG. 17B, and show the reading positions of the electronic light receiving elements X1 and X2 in the cross sections.
In FIGS. 18A to 18C, the same reference numerals and signs are given to the same elements as those shown in FIG. 15 to FIG. 17B.
As shown in FIG. 18B and FIG. 18C, when the electronic light receiving element X1 is positioned above the center axis of the light guide 3 and the illumination intensity is read along the center-axial direction of the light guide 3 by the electronic light receiving element X1, it can be confirmed that the relative intensity is constant as shown by solid lines on the upper side of FIG. 18A.
As shown in FIG. 18B, the spread of the light is large on the end face of the one end side 33 of the light guide 3. On the contrary, as shown in FIG. 18C, the spread of the light is small on the end face of the other end side 34 of the light guide 3. For this reason, when the illumination intensity is read along the center-axial direction of the light guide 3 by the electronic light receiving element X2 which is shifted from the center axis of the light guide 3 in the transverse direction (Z-axis direction in FIGS. 18B and 18C), it can be confirmed that the relative intensity gradually falls from the one end side 33 toward the other end side 34 of the light guide 3 as shown by dotted lines on the upper side of FIG. 18A.
As described above, in the related-art illumination device 1, there is a disadvantage in that the illuminance distribution of the light guide 3 in the longitudinal direction is changed according to the reading position of the electronic light receiving element.

### SUMMARY OF THE INVENTION

Exemplary embodiments of the present invention address the above disadvantages and other disadvantages not described above. However, the present invention is not required to overcome the disadvantages described above, and thus, an exemplary embodiment of the present invention may not overcome any of the disadvantages described above.

Accordingly, it is an illustrative aspect of the present invention to provide an illumination device which can increase spread of the illumination intensity on the other end side.

According to one or more illustrative aspects of the present invention, there is provided an illumination device. The illumination device comprises: a light guide comprising: an outer peripheral face; one end face; and the other end face, wherein a groove is formed in the outer peripheral face along a longitudinal direction of the light guide; a light source provided to face the one end face of the light guide; and a diffusion reflector provided to face the other face of the light guide.

According to one or more illustrative aspects of the present invention, there is provided an illumination device. The illumination device comprises: a light guide comprising: an outer peripheral face; one end face; and the other end face, wherein a groove is formed in the outer peripheral face along a longitudinal direction of the light guide; and a light source provided to face the one end face of the light guide, wherein an unevenness is formed on the other end face of the light guide.

Other aspects of the invention will be apparent from the following description, the drawings and the claims.

### BRIEF DESCRIPTION OF THE DRAWINGS

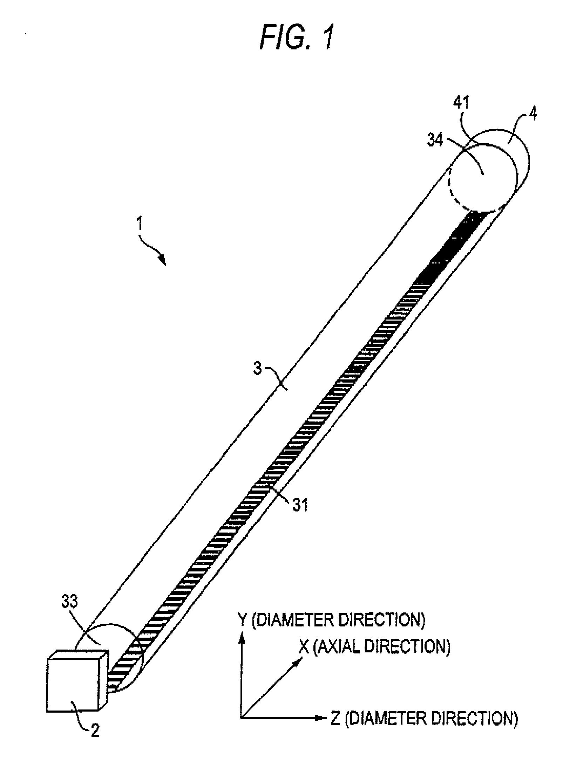

FIG. 1 is a diagram illustrating an illumination device according to a first exemplary embodiment;

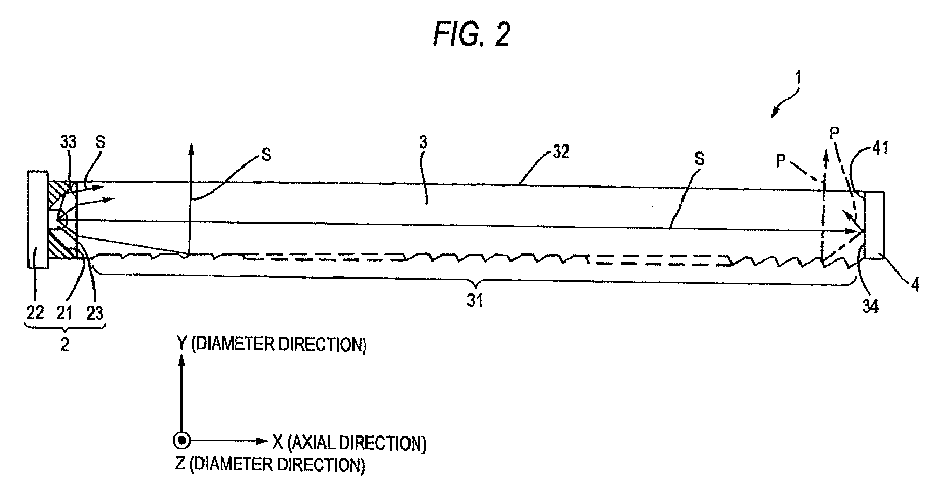

FIG. 2 is a diagram illustrating the illumination device according to the first exemplary embodiment;

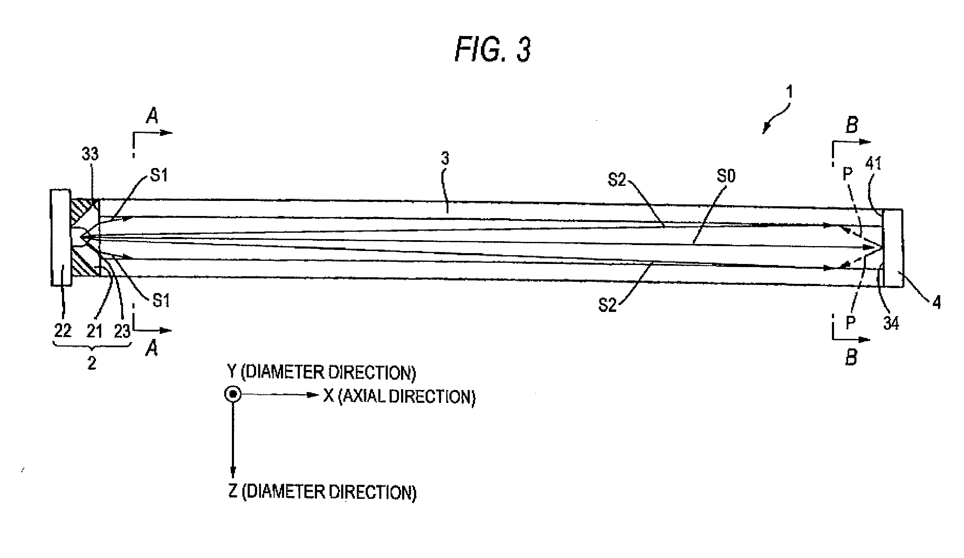

FIG. 3 is a diagram illustrating the illumination device according to the first exemplary embodiment;

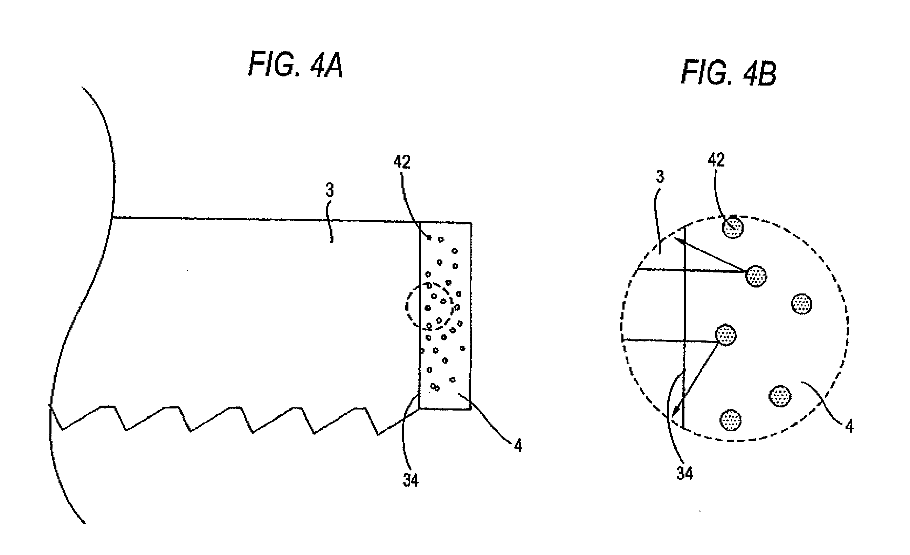

FIGS. 4A and 4B are diagrams illustrating the illumination device according to the first exemplary embodiment;

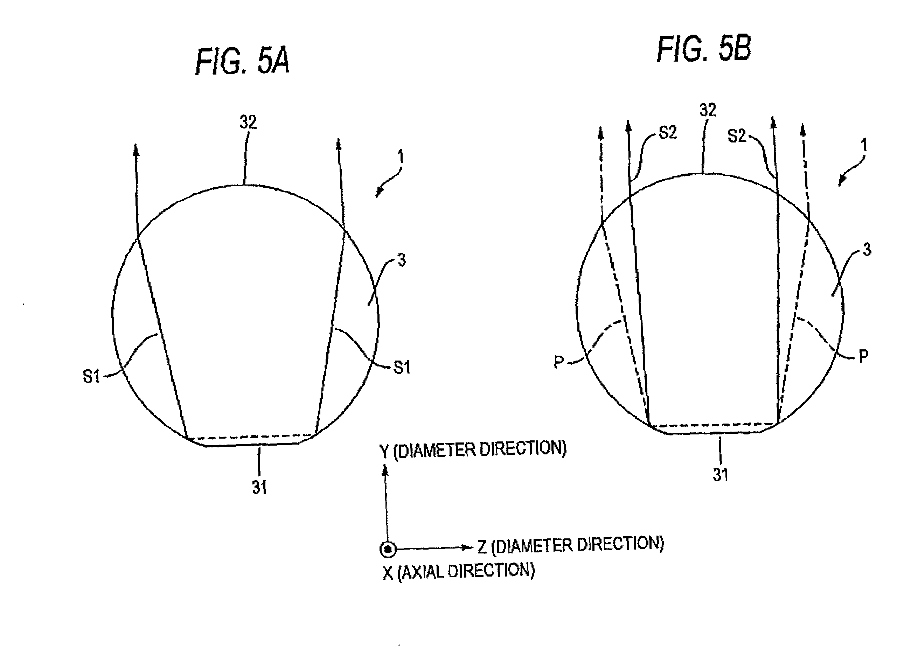

FIGS. 5A and 5B are diagrams illustrating the illumination device according to the first exemplary embodiment;

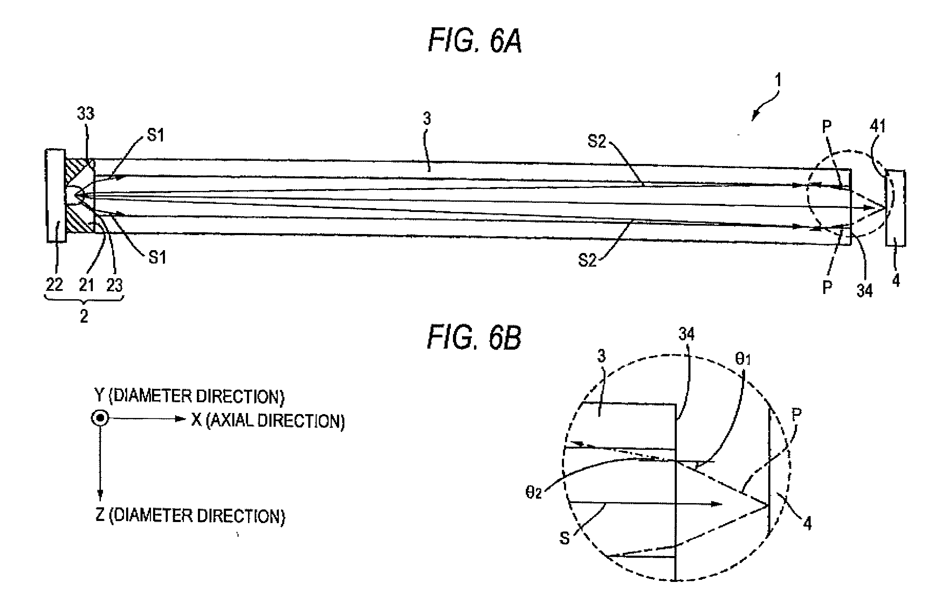

FIGS. 6A and 6B are diagrams illustrating an illumination device according to a second exemplary embodiment;

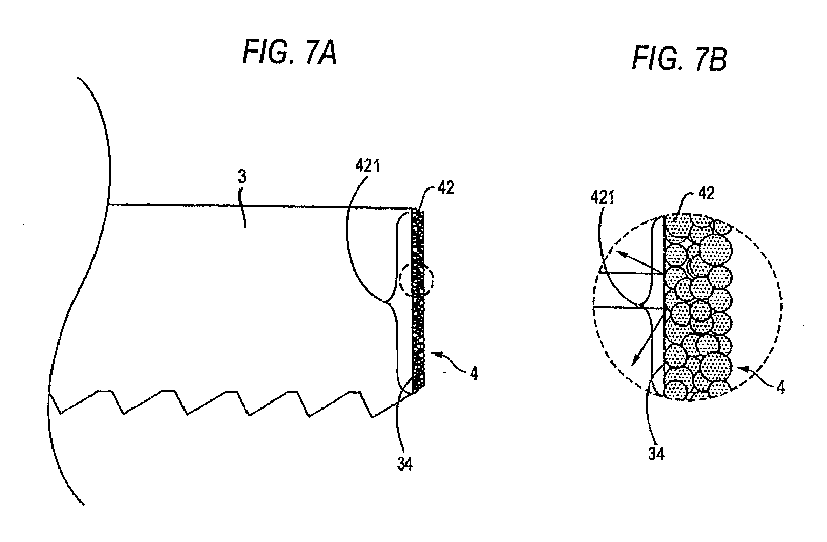

FIGS. 7A and 7B are diagrams illustrating an illumination device according to a third exemplary embodiment;

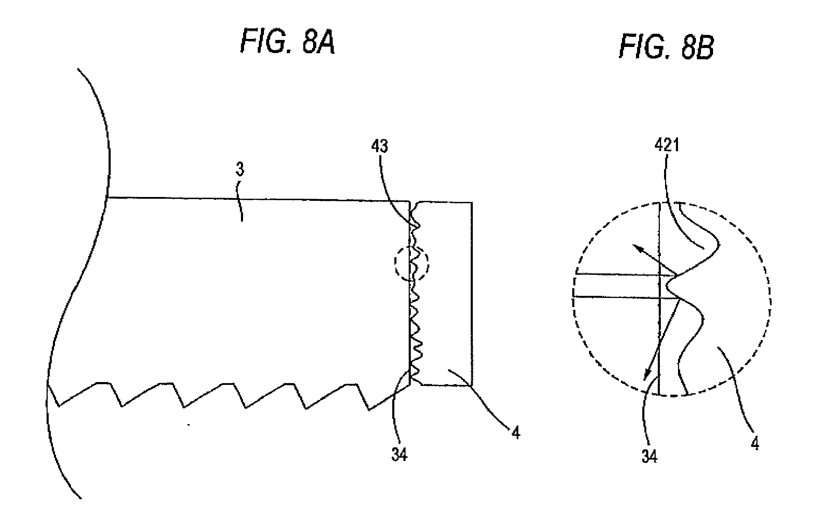

FIGS. 8A and 8B are diagrams illustrating an illumination device according to a fourth exemplary embodiment;

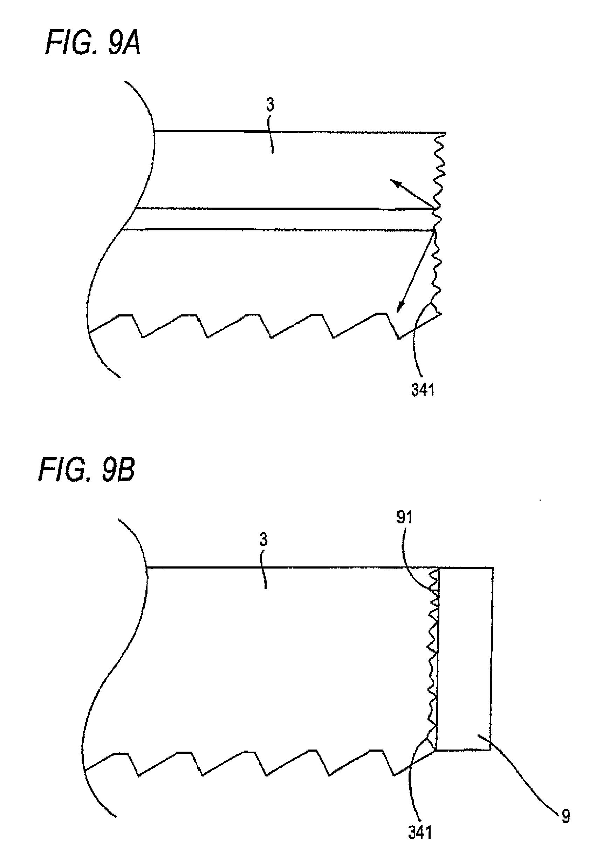

FIGS. 9A and 9B are diagrams illustrating an illumination device according to a fifth exemplary embodiment;

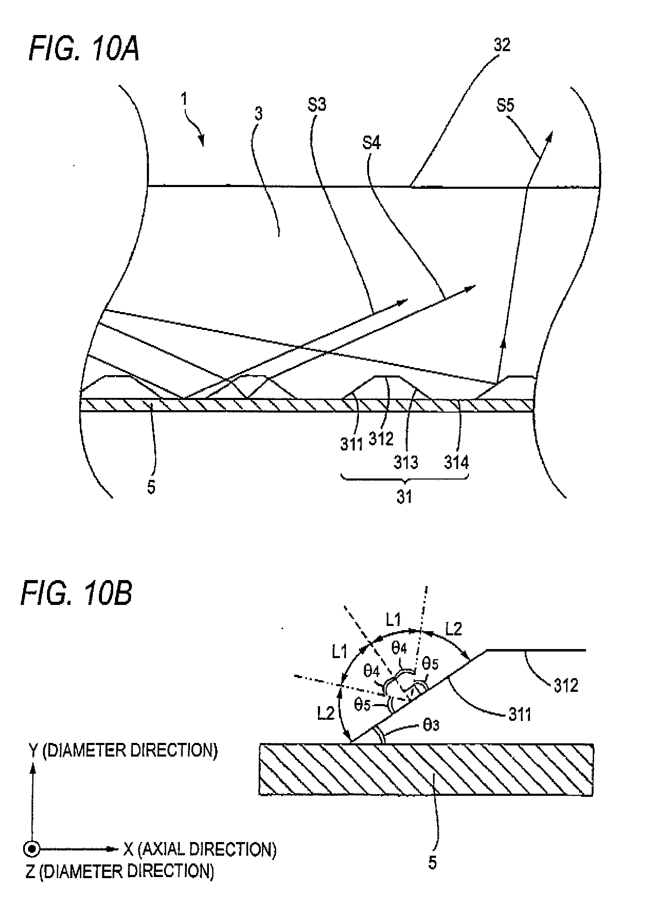

FIGS. 10A and 10B are diagrams illustrating an illumination device according to a sixth exemplary embodiment;

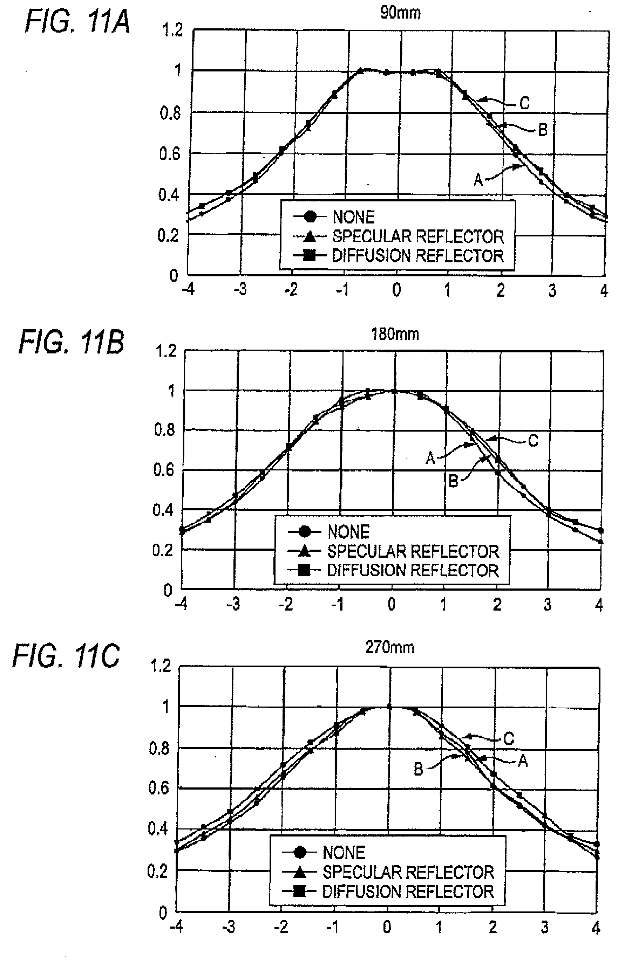

FIGS. 11A to 11C are diagrams illustrating an experiment result of Experiment 1;

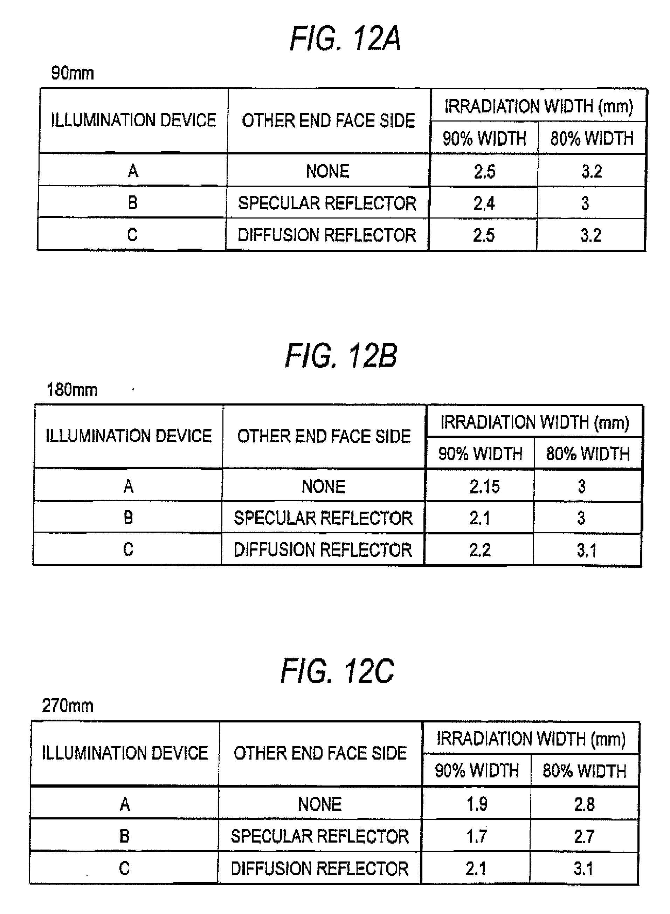

FIGS. 12A to 12C are diagrams illustrating an experiment result of Experiment 1;

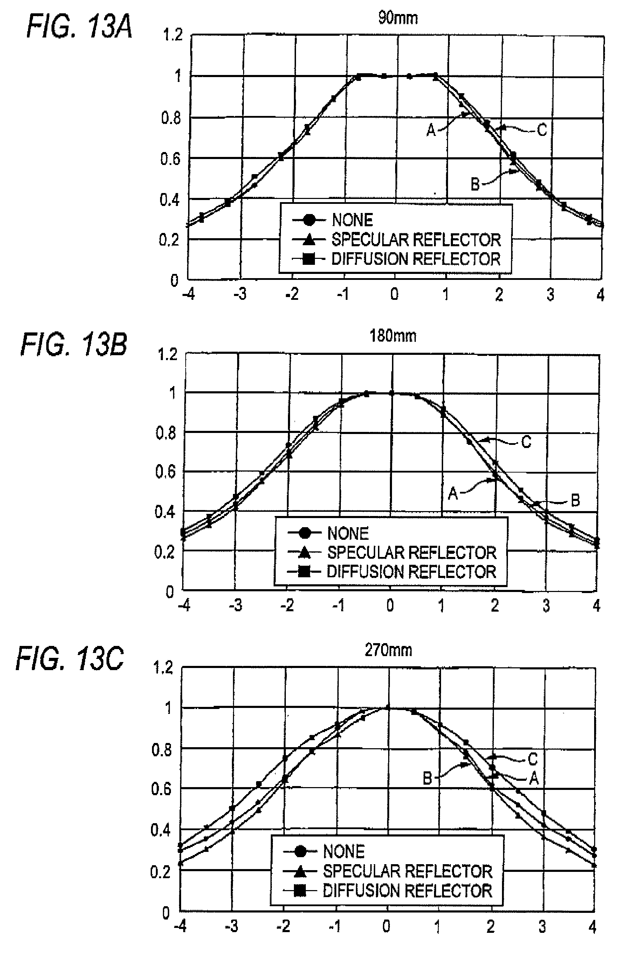

FIGS. 13A to 13C are diagrams illustrating an experiment result of Experiment 2;

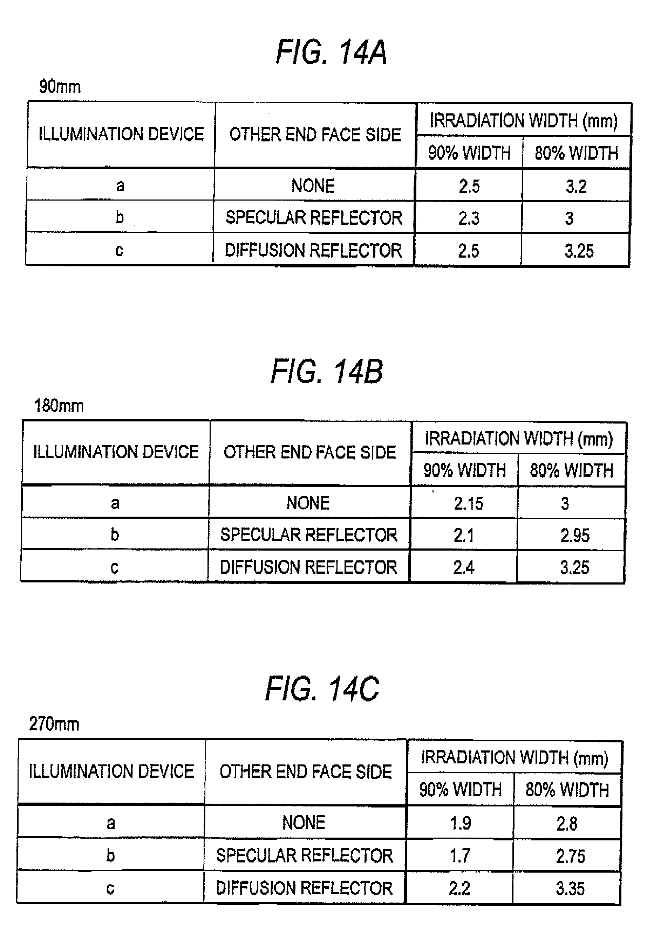

FIGS. 14A to 14C are diagrams illustrating an experiment result of Experiment 2;
FIG. 15 is a diagram illustrating an illumination device according to the related art;
FIG. 16 is a diagram illustrating an illumination device according to the related art;
FIGS. 17A and 17B are diagrams illustrating an illumination device according to the related art; and
FIGS. 18A to 18C are diagrams illustrating an illumination device according to the related art.

### DETAILED DESCRIPTION OF EXEMPLARY EMBODIMENTS

Exemplary embodiments of the present invention will be now described with reference to the drawings.

As shown in FIG 1, an illumination device 1 according to a first exemplary embodiment includes; a light guide 3 provided with a groove 31 on an outer peripheral face along a longitudinal direction; a light source 2 provided to face one longitudinal end 33 of the light guide 3; and a diffusion reflector 4 provided to face the other longitudinal end 34 of the light guide 3.

There are various kinds of the shape of the groove provided on the outer peripheral face of the light guide 3. In the first exemplary embodiment, for example, the groove is formed by incision in a direction (Z direction in FIG 1) perpendicular to an axial direction of the light guide 3. A plurality of such grooves 31 are provided along the longitudinal direction of the light guide 3.
In the light guide 3, the outer peripheral face (light output face 32) opposed to the groove 31 is formed in a circular arc shape to efficiently output light (see FIGS. 5A and 5B), and the circular arc shaped light output face 32 is provided on the outer peripheral face along the longitudinal direction of the light guide 3. Accordingly, the whole light guide 3 is formed in a cylindrical shape as shown in FIG. 1.
The light guide 3 is formed of a transparent member such as acryl resin, polyester resin, and polycarbonate resin.

As shown in FIG. 2 and FIG 3, an LED 2 is used as the light source 2, and provided at the one longitudinal end 33 of the light guide 3.
In the LED 2 according to the first exemplary embodiment, a light emitting element (not shown) is placed on a substrate 22, a hemispherical sealant 23 is provided to seal the light emitting element, and a reflection mirror 21 having a conic reflection face is provided to surround the sealant 23.
As shown in FIG. 2 and FIG 3, the hemispherical sealant 23 of the LED 2 is disposed to face the one longitudinal flat end face 33 of the light guide 3.
The visible range light is used as the illumination light source 2 of the image reading device, and thus, for example, the LED 2 emitting white light may be used as the light source 2 according to the first exemplary embodiment.

As shown in FIG. 2 and FIG 3, the diffusion reflector 4 is provided close to the other longitudinal flat end face 34 of the light guide 3.
As shown in FIG. 4, the diffusion reflector 4 is formed by enclosing granular white particles 42 such as barium sulfate, titanium dioxide, magnesium sulfate, magnesium carbonate, and calcium carbonate into a transparent member formed of, for example, acryl resin, polyester resin, or polycarbonate resin.
As shown in FIG 4B, in the first exemplary embodiment, the white particles are almost spherical. For this reason, when viewing the diffusion reflector 4 from the other end face 34 of the light guide 3, the reflection face of the white particles 42 seems to be a hemispherical shape protruding toward the other end 34 of the light guide 3.
In the first exemplary embodiment, the almost-spherical white particles are irregularly disposed in the transparent member. For this reason, when viewing the diffusion reflector 4 from the other end face 34 of the light guide 3, it seems that the almost-spherical reflection face is irregularly disposed.
Accordingly, for example, when light traveling along the axial direction of the light guide 3 enters the diffusion reflector 4, the light penetrates the transparent member of the diffusion reflector 4. Then, the light is reflected such that the angle and the direction thereof are changed by the shape of the outer faces of the white particles 42. The details will be now described with reference to FIG. 4B. On the upper side of FIG 4B, the light traveling along the axial direction of the light guide 3 is reflected such that the angle thereof is slightly changed toward the upper side of the figure. On the contrary on the lower side of FIG. 4B, the light traveling along the axial direction of the light guide 3 is reflected such that the angle thereof is greatly changed toward the lower side of the figure as compared with the case of the upper side of the figure. Since the light comes into contact with the outer faces of the white particles 42 at different positions, the angles of the light are changed according to the curved face of the contact positions.
Additionally, in the description of FIG. 4B, the transparent member constituting the light guide 3 is the same as the transparent member constituting the diffusion reflector 4.

As described above, in the diffusion reflector 4 according to the first exemplary embodiment, the granular white particles 42 are enclosed into the transparent member, so that the light incident from the light guide 3 to the diffusion reflector 4 is diffusely reflected, which means a phenomenon that light flux is incident to a surface of an object is reflected in various directions such that no image is generated from the surface.

In the illumination device 1 according to the first exemplary embodiment, electric power is supplied from a power supply device (not shown) to the light source 2, so that the linear-shaped light traveling along the longitudinal direction of the light guide 3 is output from the light output face 32 of the light guide 3. The process until the illumination device 1 outputs the linear-shaped light will be now described.

As shown in FIG 2, when the electric power is supplied to the light source 2, visible light is emitted from a light emitting element (not shown). Since the sealant 23 for sealing the light emitting element is formed of the transparent member, the light S emitted from the light emitting element (not shown) penetrates the inside of the sealant 23. The visible light penetrating the sealant 23 is output from the outer face of the sealant 23. At that time, some of the light S output from the sealant 23 travels toward the one longitudinal end face 33 of the light guide 3, and some travels toward the reflection face of the reflection mirror 21 surrounding the sealant 23. The visible light traveling toward the reflection face of the reflection mirror 21 is reflected by the reflection face, and then travels toward the one longitudinal end face 33 of the light guide 3 (see the arrows in FIG. 2).
As described above, the outgoing light S emitted from the light source 2 travels toward the one longitudinal end face 33 of the light guide 3, and is introduced from the one end face 33 to the inside of the light guide 3.

As shown in FIG 3, the visible light introduced into the light guide 3 is guided along the longitudinal direction of the light guide 3.
The outgoing light S output from the light source 2 includes various angle components with respect to the center ray of light, and the various angle components exist even when the light S is introduced into the light guide 3. In other words, the light having the angle component with respect to the axial direction of the light guide 3 is the light S traveling toward the outer peripheral face of the light guide 3. For this reason, the light S1 having the large angle component with respect to the axial direction of the light guide 3 easily travels toward the outer peripheral face on the one end side 33 of the light guide 3, and the light S2 having the small angle component with respect to the axial direction of the light guide 3 easily travels toward the outer peripheral face on the other end side 34 of the light guide 3. The light which does not travel toward the outer peripheral face extending along the longitudinal direction of the light guide 3 is the light S in which the angle component is approximate to the axial direction of the light guide 3. The light S penetrates the inside of the light guide 3 along the axial direction of the light guide 3 and travels toward the other longitudinal end face 34 of the light guide 3.

For example, as shown in FIG 5A, the light S1 having the large angle component with respect to the axial direction of the light guide 3 travels toward the groove 31 provided on the outer peripheral face of the light guide 3 on the one longitudinal end side 33 of the light guide 3, and then the reflection light reflected by the groove 31 is output from the light output face 32 (the upper side of the light guide 3 shown in FIG 5A) of the light guide 3. At that time, since the angle component of the visible light traveling toward the groove 31 is large, the angle component of the reflection light S1 reflected by the groove 31 is also large and thus the outgoing light S output from the light output face 32 on the one end side 33 of the light guide 3 becomes the light S1 having a large spread.

Meanwhile, for example, as shown in FIG. 5B, when the light S2 having the small angle component with respect to the axial direction of the light guide 3 travels toward the groove 31 provided on the outer peripheral face of the light guide 3 on the other longitudinal end side 34 of the light guide 3, the angle component of the visible light traveling toward the groove 31 is small and thus the angle component of the reflection light reflected by the groove 31 is also small. In addition, the outgoing light S output from the light output face 32 on the other end side 34 of the light guide 3 becomes the light S2 having a small spread.
In the first exemplary embodiment, the diffusion reflector 4 is provided to face the other end face 34 of the light guide 3. Accordingly, as shown in FIG. 3, the light having the angle component approximate to the axial direction of the light guide 3 is diffusely-reflected by the diffusion reflector 4 provided on the other end face 34 of the light guide 3, and is introduced into the light guide 3. The diffusely-reflected light P includes various angle components with respect to the axial direction of the light guide 3, and also includes light having an angle component larger than that of the light S0 having the angle component approximate to the axial direction of the light guide 3. For this reason, for example, as shown in FIG. 5B, when the diffusely-reflected light having the large angle component with respect to the axial direction of the light guide 3 in the diffusely-reflected light P travels toward the groove 31 on the other longitudinal end side 34, the reflection light reflected by the groove 31 is output from the light output face 32 (the upper side of the light guide 3 shown in FIG. 5B) of the light guide 3. At that time, the angle component of the diffusely-reflected light P traveling toward the groove 31 is large. Accordingly, the angle component of the reflection light reflected by the groove 31 is also large, and the outgoing light P output from the light output face 32 on the other end side 34 of the light guide 3 has a large spread.

That is, in the illumination device 1 according to the first exemplary embodiment, the diffusion reflector 4 is provided to face the other end face 34 of the light guide 3, and thus it is possible to increase the spread of the light output from the light output face 32 on the other end side 34 of the light guide 3 in the direction perpendicular to the axial direction of the light guide 3.
Accordingly, according to the light output from the illumination device 1, the illuminance distribution at the position deviating from the axial direction of the light guide 3 in the transverse direction (Z-axis direction in FIG. 3) can be made close to the illuminance distribution at the position along the axial direction of the light guide 3.

In the first exemplary embodiment, the diffusion reflector 4 is formed by enclosing the white particles 42 into the transparent member. Further, translucent particles having a refractive index different from that of the transparent member may be enclosed therein instead of the white particles 42.
This case will be now described with reference to FIG. 4. Reference numeral 42 in FIG. 4 corresponds to the translucent particles. When the light entering the diffusion reflector 4 reaches the translucent particles 42, the light may be reflected on the outer faces of the translucent particles 42. Since the translucent particles 42 are almost spherical, the angle of the light is changed according to the curved face at contact position of the translucent particles 42. That is, even when the diffusion reflector 4 is formed by enclosing the translucent particles having the refractive index different from that of the transparent member into the transparent member, it is possible to obtain the diffusely-reflected light, similarly to the case where the white particles are enclosed therein. Accordingly, the member for diffusion and reflection may be the translucent particles.

Further, in the first exemplary embodiment, the transparent member may be a transparent member having adhesion such as acryl resin and silicon resin. When the transparent member is provided with adhesion, it is possible to bond the diffusion reflector 4 to the other end face 34 of the light guide 3.

In the illumination device 1 according to the first exemplary embodiment, the illuminance distribution of the light output from the light output face 32 of the light guide 3 is widened on the other end side 34 of the light guide 3. However, when the diffusion reflector 4 and the light guide 3 are disposed close to each other, most of the light diffused by the diffusion reflector 4 is incident to the other end side 34 of the light guide 3 without changing the light traveling direction. For this reason, the illumination intensity of the light reaching the center of the light guide 3 may be decreased. Accordingly, the illumination intensity of the light output from the center of the light guide 3 may be decreased. Also, in order to receive the light using the electronic light receiving element, it is advantageous that an illumination intensity is equal to or higher than a predetermined value. Concretely, from a result of Experiment 2 to be described later, it is advantageous that the illumination intensity is equal to or higher than 80% of a peak illumination intensity.
Next, an illumination device that allows the light P diffusely-reflected by the diffusion reflector 4 to reach the center of the light guide 3 to improve the illumination intensity of the light output from the light output face 32 in the center of the light guide 3 will be described in a second exemplary embodiment.

FIG. 6A is a diagram illustrating an illumination device 1 according to a second exemplary embodiment, and is a cross-sectional view taken along the axial direction of the light guide 3. FIG. 6B is an enlarged view of a part circularly surrounded by the dotted line on the other side 34 of the light guide 3 shown in FIG 6A.
In FIG. 6, the same reference numerals and signs are given to the same elements as those shown in FIG 3.

The illumination device 1 shown in FIG. 6A is different from the illumination device 1 shown in FIG. 3 in that the diffusion reflector 4 is separated from the other end face 34 of the light guide 3.
As the description of the second exemplary embodiment shown in FIG 6A and 6B, the description of the parts in common with the first exemplary embodiment described in FIG. 3 is omitted herein, and the differences from FIG. 3 will be now described.

On the other side 34 of the light guide 3, the diffusion reflector 4 is provided to be separated from the other end face 34.
Thus, an air layer having a refractive index lower than that of the light guide 3 is interposed between the light guide 3 and the diffusion reflector 4. With such a configuration, when the diffused light P diffusely-reflected by the diffusion reflector 4 is incident on the light guide 3, the angle component thereof becomes small with respect to the axial direction of the light guide 3.
Specifically, as shown in FIG. 6B, the diffusely-reflected light P reflected by the diffusion reflector 4 has an angle of θ₁ with respect to the axial direction of the light guide 3 at the air layer between the diffusion reflector 4 and the light guide 3. When the diffusely-reflected light is incident on the light guide 3 having the refractive index higher than that of the air layer, the diffusely-reflected light P is changed by an angle of θ₂ with respect to the axial direction of the light guide 3. This has been known as Snell's law. When light is incident from a part where a refractive index is low to a part where a refractive index is high, the incident angle of the light becomes small. By this Snell's law, the illumination device 1 according to the second exemplary embodiment allows the diffusely-reflected light P to reach the center of the light guide 3.

Accordingly, in the illumination device 1 according to the second exemplary embodiment, the light guide 3 and the diffusion reflector 4 are optically separated from each other, and thus it is possible to improve the illumination intensity of the outgoing light output from the light output face 32 at the center of the light guide 3.

In the second exemplary embodiment, the transparent member constituting the light guide 3 is the same as the transparent member constituting the diffusion reflector 4, and the air layer having the refractive index lower than that of the member constituting the light guide 3 is provided between the light guide 3 and the diffusion reflector 4. Thus, the light can reach the center from the other end face 34 of the light guide 3. Namely, it can be found that an element having a refractive index lower than that of the transparent member constituting the light guide 3 may be disposed between the transparent member constituting the light guide 3 and the diffusion and reflection face by the white particles constituting the diffusion reflector 4.
Accordingly, when the refractive index of the transparent member constituting the diffusion reflector 4 is made lower than that of the transparent member constituting the light guide 3, the incident angle of the light incident from the transparent member of the diffusion reflector 4 to the transparent member of the light guide 3 can be decreased even when the light guide 3 and the diffusion reflector 4 are close to each other as in the first exemplary embodiment. Accordingly, it is possible to guide the light to the center of the light guide 3.

In the first and second exemplary embodiments, the diffusion reflector 4 is formed of the transparent member and the white particles or the translucent particles enclosed therein. Meanwhile, third and fourth exemplary embodiments will be now described as the other exemplary embodiments.

FIGS. 7A and 7B are diagrams illustrating an illumination device 1 according to the third exemplary embodiment. FIG. 7A is a cross-sectional view taken along the axial direction of the light guide 3 and is an enlarged view of the other end side 34. FIG. 7B is an enlarged view of a part circularly surrounded by the dotted line on the other side 34 of the light guide 3 shown in FIG. 7A.
In FIGS. 7A and 7B, the same reference numerals and signs are given to the same elements as those shown in FIGS. 4A and 4B.

The illumination device 1 shown in FIGS. 7A and 7B is different from the illumination device 1 shown in FIGS. 4A and 4B in that the diffusion reflector 4 is formed of only the white particles.
As the description of the third exemplary embodiment shown in FIGS. 7A and 7B, the description of the common parts to the first exemplary embodiment described in FIGS. 4A and 4B is omitted herein, and the differences from FIG. 4 will be now described.

As shown in FIG. 7A, the diffusion reflector 4 is provided on the other longitudinal flat end face 34 of the light guide 3.
As shown in FIG. 7B, the diffusion reflector 4 is formed by stacking granular white particles 42 such as barium sulfate.

As a method of providing the white particles constituting the diffusion reflector 4 on the whole other longitudinal end face of the light guide 3, there is the following example.
White particles such as barium sulfate and an inorganic adhesive formed of, for example, potassium silicate aqueous solution or sodium silicate aqueous solution are mixed and stirred, and the mixture is applied onto the whole other end face 34 of the light guide 3. The mixture is naturally dried with the mixture applied onto the other end face 34 of the light guide 3, thereby evaporating the inorganic adhesive. Accordingly, an aggregate of the white particles is provided on the whole other end face 34 of the light guide 3. The aggregate of the white particles becomes the diffusion reflector 4 in the third exemplary embodiment.

As shown in FIG 7B, in the third exemplary embodiment, the white particles 42 are almost spherical, and the aggregate of the white particles 42 is provided on the whole other end face 34 of the light guide 3. Accordingly, when viewing the diffusion reflector 4 from the other end face 34 of the light guide 3, an uneven shape 421 formed of the aggregate of the white particle can be seen.
Accordingly, when the light traveling along the axial direction of the light guide 3 is incident on the diffusion reflector 4, the light is reflected such that the angle and direction thereof is changed by the uneven shape 421 of the diffusion reflector 4. The details will be now described with reference to FIG 7B. On the upper side of FIG. 7B, the light traveling along the axial direction of the light guide 3 is reflected with a slight change of angle toward the upper side of the figure. On the contrary, on the lower side of FIG 7B, the light traveling along the axial direction of the light guide 3 is reflected with a great change of angle toward the lower side of the figure as compared with the case of the upper side of the figure. Since the light comes into contact with the outer faces of the white particles at different positions, the angles are changed according to the curved face at the contact positions.
As described above, the diffusion reflector 4 according to the third exemplary embodiment is provided with the uneven shape formed of the white particles, and thus the light incident from the light guide 3 to the diffusion reflector 4 is diffusely-reflected.
In the diffusion reflector 4 according to the third exemplary embodiment, the unevenness is provided to face the other end face 34 of the light guide 3, and thus it is possible to obtain the same advantages as those of the first exemplary embodiment.

As shown in FIG. 7B, there is an airspace between the unevenness 421 of the diffusion reflector 4 and the other end face 34 of the light guide 3. When this airspace is an air layer having a refractive index lower than that of the member constituting the light guide 3, it is possible to also obtain, in the third exemplary embodiment, the same advantages as those of the second exemplary embodiment.

Also, similarly to the first exemplary embodiment, in the third exemplary embodiment, the translucent particles may be used instead of the white particles.

Subsequently, a fourth exemplary embodiment will be described hereinafter.
FIGS. 8A and 8B are diagrams illustrating an illumination device 1 according to the fourth exemplary embodiment. FIG. 8A is a cross-sectional view taken along the axial direction of the light guide 3, and is an enlarged view of the other end side 34.
FIG. 8B is an enlarged view of a part circularly surrounded by the dotted line on the other side 34 of the light guide 3 shown in FIG. 8A.
In FIGS. 8A and 8B, the same reference numerals and signs are given to the same elements as those shown in FIGS. 4A and 4B.

The illumination device 1 shown in FIGS. 8A and 8B is different from the illumination device 1 shown in FIGS. 4A and 4B in that the transparent member constituting the diffusion reflector 4 is provided with an unevenness 43, the unevenness 43 is provided to face the other end face 34 of the light guide 3, and no white particle is provided in the transparent member.
As the description of the fourth exemplary embodiment shown in FIGS. 8A and 8B, the description of the common parts to the first exemplary embodiment according to FIGS. 4A and 4B is omitted herein, and the differences from FIG. 4 will be now described.

The diffusion reflector 4 is provided with the unevenness 43, and the unevenness 43 is provided to face the other longitudinal flat end face 34 of the light guide 3.
The unevenness 43 of the diffusion reflector 4 may be formed by foaming a transparent member such as acryl resin. The unevenness 43 of the diffusion reflector 4 may be formed by scratching the surface of the transparent member by a sandblast process or may be formed by melting the surface of the transparent member by a chemical process.

When light is incident from a certain medium A to a certain medium B, it is known that the light is totally reflected or transmitted depending on an incident angle of the light.
Using this, in the fourth exemplary embodiment, the light incident on the unevenness 43 is totally reflected or transmitted by providing the unevenness 43 of the diffusion reflector 4 on the other end face 34 of the light guide 3. The totally reflected light is reflected such that the angle and direction thereof is changed by the uneven shape 43. The details will be now described with reference to FIG. 8B. On the upper side of FIG. 8B, the light traveling along the axial direction of the light guide 3 is reflected such that the angle thereof is slightly changed toward the upper side of the figure. On the contrary, on the lower side of FIG. 8B, the light traveling along the axial direction of the light guide 3 is reflected such that the angle thereof is greatly changed toward the lower side of the figure as compared with the case of the upper side of the figure. This is because the light is totally reflected by the incidence at the angle of the total reflection with respect to the unevenness 43 of the diffusion reflector 4 and the angle is changed by the uneven shape 43. At the center of FIG. 8B, since the light traveling along the axial direction of the light guide 3 is incident at the angle of the transmission in the transparent member, the light is transmitted into the transparent member.
As described above, in the diffusion reflector 4 according to the fourth exemplary embodiment, a part of the light is transmitted into the diffusion reflector 4. Meanwhile, since the unevenness is provided to face the other end face 34 of the light guide 3, the light incident from the light guide 3 to the diffusion reflector 4 is diffusely-reflected.
In the diffusion reflector 4 according to the fourth exemplary embodiment, since the unevenness 43 is provided to face the other end face 34 of the light guide 3, it is possible to obtain the same advantages as in the first exemplary embodiment.

As shown in FIG. 7B, there is an airspace between the unevenness 43 of the diffusion reflector 4 and the other end face 34 of the light guide 3. When this airspace is an air layer having a refractive index lower than that of the member constituting the light guide 3, it is possible to also obtain, in the fourth exemplary embodiment, the same advantages as in the second exemplary embodiment.

In the fourth exemplary embodiment, the transparent member is provided with the unevenness 43, and thus the transparent member is provided with a diffusion and reflection function. Using this point, an exemplary embodiment of providing the other longitudinal end face 34 of the light guide 3 having the diffusion and reflection function without the diffusion reflector 4 will be now described as a fifth exemplary embodiment.

FIG 9A is a diagram illustrating an illumination device 1 according to the fifth exemplary embodiment. FIG 9A is a cross-sectional view taken along the axial direction of the light guide 3, and is an enlarged view of the other end side.
In FIG 9, the same reference numerals and signs are given to the same elements as those shown in FIG. 4.

The illumination device 1 shown in FIGS. 9A and 9B is different from the illumination device 1 shown in FIGS. 4A and 4B in that an unevenness 341 is formed on the other end face 34 of the light guide 3 without the diffusion reflector.
As the description of the fifth exemplary embodiment shown in FIGS. 9A and 9B, the description of the common parts to the first exemplary embodiment according to FIG. 4 is omitted herein, and the differences from FIG 4A and 4B will be now described.

The unevenness 341 is formed on the other longitudinal end face 34 of the light guide 3.
The unevenness 341 of the light guide 3 may be formed by foaming a transparent member such as acryl resin. The unevenness 341 of the light guide 3 may be formed by scratching the surface of the transparent member by a sandblast process or may be formed by melting the surface of the transparent member by a chemical process.

In the fifth exemplary embodiment, the advantages of the unevenness formed on the other end face 34 of the light guide 3 are overlapped with the description of the fourth exemplary embodiment, and thus the description is omitted herein.
In the light guide 3 according to the fifth exemplary embodiment, a part of light is output from the other end face 34 of the light guide 3. The other end face 34 of the light guide 3 is formed of the unevenness 341, thereby diffusely-reflecting the light incident from the inside of the light guide 3 to the other end face 34, toward the inside of the light guide 3.
In the light guide 3 according to the fifth exemplary embodiment, since the unevenness 341 is formed on the other end face 34 of the light guide 3, it is possible to obtain the same advantages as in the first exemplary embodiment.

In FIG. 9B, a means is shown which guides light to the center of the light guide 3 as described in the second exemplary embodiment.
FIG. 9B is a cross-sectional view taken along the axial direction of the light guide 3, and is an enlarged view of the other end side 34. In FIG 9, the same reference numerals and signs are given to the same elements as those shown in FIGS. 4A and 4B.

In FIG. 9B, a specular reflection face 91 of a specular reflector 9 is provided to face the other end face 34 formed of the unevenness 341 of the light guide 3. Thus, an air layer having a refractive index lower than that of the transparent member constituting the light guide 3 is formed between the other end face 34 of the light guide 3 and the specular reflector 9, and thus it is possible to obtain the same advantages as in the second exemplary embodiment.

As described above, in order to receive the light using the electronic light receiving element, it is advantageous that an illumination intensity is equal to or higher than a predetermined value (80% of a peak illumination intensity in Experiment 2).
For this reason, it is conceivable to increase the illumination intensity of the light spread in the width direction of the perpendicular cross section on the other end side 34 of the light guide 3 by improving the quantity of light output from the other end face 34 of the light guide 3. As shown in Experiment 2, it is advantageous that the quantity of light output from the other end face 34 of the light guide 3 is 50% or more. In a sixth exemplary embodiment, a means is provided which improves the quantity of light output from the other end face 34 of the light guide 3,

FIGS. 10A and 10B are diagrams illustrating an illumination device 1 according to the sixth exemplary embodiment. FIG 10A is a cross-sectional view taken along the axial direction of the light guide 3, and is a partially enlarged view of the one end side 33 of the light guide 3. FIG. 10B is an enlarged view of a part of the groove of the light guide 3 shown in FIG 10A.
In FIGS. 10A and 10B, the same reference numerals and signs are given to the same elements as those shown in FIG. 2.

The illumination device 1 shown in FIGS. 10A and 10B is different from the illumination device 1 shown in FIG. 2 in that the shape of the groove 31 of the light guide 3 is changed and a reflection mirror 5 is provided to face the groove 31.
As the description of the sixth exemplary embodiment shown in FIGS. 10A and 10B, the description of the common parts to the first exemplary embodiment shown in FIG. 2 is omitted herein, and the differences from FIG 2 will be now described.

As shown in FIG. 10A, the groove 31 of the light guide 3 is formed of a first face 311 decreasing a diameter of the light guide 3 from one end side 33 to the other end side 34 of the light guide 3, a second face 312 continuing to the first face 311 and being parallel to the axial direction of the light guide 3, a third face 313 continuing to the second face 312 and decreasing the diameter of the light guide 3 from the other end side 34 to the one end side 33 of the light guide 3, and a fourth face 314 continuing to the third face 313 and being parallel to the axial direction of the light guide 3.
In the sixth exemplary embodiment, an inclination angle (inclination angle with respect to the axial direction (X-direction in FIGS. 10A and 10B) of the light guide 3) θ₃ formed by the first face 311 is about 35°, and an inclination angle (inclination angle with respect to the axial direction (X-direction in FIGS. 10A and 10B) of the light guide 3) formed by the third face 313 is also about 35°.

A half-cylindrical reflection mirror 5 parallel to the longitudinal direction of the light guide 3 is provided outside the groove 31 of the light guide 3, and the groove 31 of the light guide 3 and the reflection mirror 5 are opposed to each other. Accordingly, the fourth face constituting the groove 31 comes into contact with the reflection face of the reflection mirror 5.

In the illumination device 1 according to the sixth exemplary embodiment, the light emitted from the light source 2 (not shown) to the inside of the light guide 3 is totally reflected or transmitted by an incident angle to the first face of the groove 31. This point will be now described with reference to FIG. 10B.

When the light guided in the light guide 3 is incident on the first face 311 of the groove 31, a critical angle at which the total reflection occurs is obtained according to Snell's law, by a refractive index of, for example, acryl resin constituting the light guide 3 and a refractive index of the air between the groove 31 and the reflection mirror 5. When the member constituting the light guide 3 is the acryl resin, the critical angle is about 42° according to Snell's law.
As shown in FIG. 10B, when the light is incident on the first face 311 in a range of L2, the total reflection occurs. That is, when the light is incident on the first face 311 in a range of angle 0° < θ₅ ≤ 48° with respect to the first face 311, the total reflection occurs.
On the other hand, when the light is incident on the first face 311 in a range of L1, the total reflection does not occur and some of the light penetrates the first face 311. That is, when the light is incident on the first face 311 in a range of angle 0° < θ₄ ≤ 42° with respect to a line perpendicular to the first face 311, the total reflection does not occur and some of the light penetrates the first face 311.
As described above, the light is totally reflected or transmitted according to the angle of the light incident to the first face 311 of the groove 31.
Assuming that the axial direction of the light guide 3 is 0°, a range α of the angle of the total reflection in the first face 311 is -35° < α ≤ 13° and 97° ≤ α <145°. In addition, assuming that the axial direction of the light guide 3 is 0°, a range β of the angle of the transmission in the first face 311 is 13° < β < 97°.

As shown in FIG. 10A, for example, in a case of S5, since the light in the light guide 3 is incident in the angle range α of the total reflection, the light is totally reflected by the first face 311 and is output from the light output face 32.
Meanwhile, since the light of S4 is incident in the angle range β of the transmission, the light penetrates the first face 311 and is reflected by the reflection mirror 5. The light reflected by the reflection mirror 5 is incident on the third face 313 of the light guide 3, and is guided again toward the end side of the light guide 3 in the light guide 3.
The light S3 which is not incident on the first face 311 and is incident on the fourth face 314 is reflected by the reflection face 5 and travels toward the end portion of the light guide 3.
As described above, in the illumination device 1 according to the sixth exemplary embodiment, the groove 31 of the light guide 3 is formed in the groove shape shown in FIGS. 10A and 10B, Accordingly, a part of the light penetrates the groove 31 of the light guide 3, then is reflected by the reflection mirror 5, and then is guided again in the light guide 3, thereby improving the quantity of light reaching the other end side 34 of the light guide 3. Therefore, in the illumination device 1 according to the sixth exemplary embodiment, the groove 31 of the light guide 3 is formed, for example, as shown in FIGS. 10A and 10B, and thus the quantity of light reaching the other end side 34 of the light guide 3 can be made equal to or more than 50%. Accordingly, it is possible to improve the illumination intensity in the cross width direction of the other end side 34 of the light guide 3.

In order to confirm the effect of the present invention, the following Experiment 1 and Experiment 2 are carried out. Firstly, in Experiment 1, in order to confirm the effect of the diffusion reflector 4 provided to face the other longitudinal end 34 of the light guide 3, the illumination device 1 according to the present invention is compared with the illumination devices 1 according to comparative examples.
For Experiment 1, as the illumination devices 1 according to comparative examples, as shown in FIG 15 and FIG. 16, an illumination device A from which the reflector 9 provided at the other end 34 of the light guide 3 is removed, and an illumination device B provided with the reflector 9 at the other end 34 of the light guide 3 are prepared, respectively. In addition, as the illumination device 1 according to the present invention, an illumination device C provided with the diffusion reflector 4 on the other end side 34 of the light guide 3 shown in FIG 1 to FIG. 4 is prepared.
In the illumination devices A to C, the reflection mirror 5 shown in FIGS. 10A and 10B is disposed to face the groove 31 of the light guide 3 for comparison with Experiment 2.

According to the common specifications of the illumination devices A to C, the light guide 3 is formed of acryl resin, the axial length of the light guide 3 is about 360 mm, and the diameter of the light guide 3 is about 6 mm. The groove 31 of the light guide 3 has the configuration shown in FIG. 1 and FIG. 2, and all the grooves of the illumination devices A to C are the same.
A diffusion component of the specular reflector of the illumination device B is about 10% or less, and a diffusion component of the diffusion reflector 4 of the illumination device C is about 96%.

An experiment method of Experiment 1 is as follows. In the respective illumination devices, light emitted from the light source 2 provided at one end 33 of the light guide 3 travels toward the one end face 33 of the light guide 3, and the illumination intensity of the light output from the light output face 32 facing the groove 31 of the light guide 3 is measured. The illumination intensity of the light is measured at three parts of a position away from the one end 33 of the light guide 3 by 90 mm, a position away from the one end 33 of the light guide 3 by 180 mm, and a position away from the one end 33 of the light guide 3 by 270 mm in the longitudinal direction of the light guide 3.
As the measurement method, at the three parts, the measurement is shifted in a direction perpendicular (Z-axis direction in FIG 1) to the axial direction of the light guide 3.

The experiment result is shown in FIGS. 11A to 11C and FIGS. 12A to 12C. FIGS. 11A to 11C show the illuminance distribution in the perpendicular direction (Z-axis direction in FIG. 1) with respect to the axial direction of the light guide 3 at the three parts in the longitudinal direction of the light guide 3, and the illuminance distributions of the illumination devices A to C are superposed.
The horizontal axis (unit mm) in FIG. 11 represents a position of the perpendicular direction (Z-axis direction in FIG. 1) with respect to the axial direction of the light guide 3, and a position of the center axis of the light guide 3 is set to 0 mm. The vertical axis in FIGS. 11A to 11C represents a relative intensity with respect to the illumination intensity, and the peak illumination intensity is set to 1.

FIGS. 12A to 12C shows, in the three parts (experiment result of FIG. 11A to FIG. 11C) in the longitudinal direction of the light guide 3 shown in FIGS. 11A to 11C, the width having an illumination intensity of 90% or more (0.9 or more on the vertical axis in FIG 11) with respect to the peak illumination intensity, and the width having an illumination intensity of 80% or more (0.8 or more on the vertical axis in FIG. 11) with respect to the peak illumination intensity.

On consideration, as for the width having the illumination intensity of 90% or more with respect to the peak illumination intensity in the illumination devices A to C, on the one end side 33 (position of 90 mm from one end 33 of the light guide 3) of the light guide 3, as can be seen from FIG. 12A, the width is about 2.5 nun in the illumination device A, the width is about 2.4 mm in the illumination device B, and the width is about 2.5 mm in the illumination device C. On the contrary, on the other end side 34 (position of 270 mm from one end 33 of the light guide 3) of the light guide 3, as can be seen from FIG. 12C, the width is about 1.9 mm in the illumination device A, which is decreased by about 0.6 mm as compared with the one end side 33, the width is about 1.7 mm in the illumination device B, which is decreased by about 0.7 mm, and the width is about 2.1 mm in the illumination device C, which is decreased by about 0.4 mm. In other words, the illumination device C according to the present invention is provided with the diffusion reflector 4 on the other end side 34 of the light guide 3, and thus it is possible to enlarge the spread of the illumination intensity on the other end side 34 of the light guide 3 as compared with the illumination devices A and B according to the comparative example. The effect of the illumination device C according to the present invention can be seen even in the width having the illumination intensity of 80% or more with respect to the peak illumination intensity.
The illumination device C can widen the tolerable range of the measurement position of the electronic light receiving element, as compared with the illumination devices A and B according to the comparative examples.

The electronic light receiving element is used for the invention, and the illumination intensity necessary for the electronic light receiving element to receive light is the illumination intensity of about 80% or more with respect to the peak illumination intensity. In the experiment results shown in FIGS. 12A to 12C, the 80% width of the illumination device C according to the present invention is about 3.2 mm on the one end side 33 (position of 90 mm) but is about 3.1 mm on the other end side 34 (position of 270 mm). The width on the other end side 34 is smaller than that on the one end side 33 by about 0.1 mm. Considering the necessary illumination intensity of the electronic light receiving element, as for the width having the intensity of about 80% or more with respect to the peak illumination intensity, it is advantageous that the width on the other end side 34 of the light guide 3 is at least equal to or more than the width on the one end side 33 of the light guide 3.
In Experiment 1, the quantity of light output from the other end face 34 of the light guide 3 is about 25% of the quantity of light incident to the one end face 33 of the light guide 3. For this reason, as the illumination intensity of the light output from the other end face 34 is improved, the illumination intensity of the light diffusely-reflected by the diffusion reflector 4 provided at the other end 34 is also improved. Accordingly, it is considered that the 80% width on the other end side 34 of the light guide 3 can be improved. This is shown in Experiment 2.

In Experiment 2, the groove 31 is formed on the one end side 33 of the light guide 3 of the illumination devices A to C used in Experiment 1. The shape of groove 31 is shown in FIGS. 10A and 10B. Also, reference signs "a" to "c" denote the respective illumination devices. The quantity of light output from the other end face 34 of the illumination devices a to c is about 50% of the quantity of light incident to the one end face 33. The illumination devices a to c used in Experiment 2 have common specifications except for the groove shape of the illumination devices A to C used in Experiment 1, and thus the description thereof is omitted herein. The experiment method in Experiment 2 is the same as the experiment method in Experiment 1, and thus the description thereof is omitted herein.

The experiment result of Experiment 2 is shown in FIG. 13A to 13C and FIGS. 14A to 14C. FIGS. 13A to 13C show the illuminance distribution in the perpendicular direction (Z-axis direction in FIG. 1) with respect to the axial direction of the light guide 3 at the three parts in the longitudinal direction of the light guide 3, and the illuminance distributions of the illumination devices a to c are superposed, respectively.
The horizontal axis (unit mm) in FIGS. 13A to 13C represents a position of the perpendicular direction (Z-axis direction in FIG. 1) with respect to the axial direction of the light guide 3, and a position of the center axis of the light guide 3 is set to 0 mm. The vertical axis in FIGS. 13A to 13C represents a relative intensity with respect to the illumination intensity, and the peak illumination intensity is set to 1.

FIGS. 14A to 14C show, in the three parts (experiment result of FIG. 13A to FIG. 13C) in the longitudinal direction of the light guide 3 shown in FIGS. 13A to 13C, the width having an illumination intensity of about 90% or more (0.9 or more on the vertical axis in FIGS. 13A to 13C) with respect to the peak illumination intensity, and the width having an illumination intensity of about 80% or more (0.8 or more on the vertical axis in FIGS. 13A to 13C) with respect to the peak illumination intensity.

The consideration of Experiment 2 will be now described with reference to FIGS. 14A to 14C and FIGS. 12A to 12C. FIGS. 14A to 14C are the experiment results according to Experiment 2 and FIGS. 12A to 12C are the experiment results according to Experiment 1.
As can be seen from the experiment results shown in FIGS. 12A to 12C and FIGS. 14A to 14C, in the illumination devices a and b according to the comparative examples, even when the quantity of light output from the other end face 34 of the light guide 3 is improved from about 25% to about 50%, the width having the illumination intensity of about 80% or more with respect to the peak illumination intensity is hardly changed.

On the contrary, as can be seen from the experiment results shown in FIGS. 12A to 12C and FIGS. 14A to 14C, in the illumination device c according to the present invention, when the quantity of light output from the other end face 34 of the light guide 3 is improved from about 25% to about 50%, the width having the illumination intensity of about 80% or more becomes large on the other end side 34 of the light guide 3.
Specifically, in the illumination device C, the 80% width on the one end side 33 is about 3.2 mm, but the 80% width on the other end side 34 is about 3.1 mm, which is decreased by about 0.1 mm. Meanwhile, in the illumination device c, the 80% width on the one end side 33 is about 3.25 mm, but the 80% width on the other end side 34 is about 3.35 mm, which is increased by about 0.10 mm. In other words, when the quantity of light output from the other end face 3 is about 50% or more of the quantity of light incident to the one end face 33, the illumination device according to the present invention can make the 80% width of the other end side 34 larger than the 80% width of the one end side 33, without shortening the 80% width of the one end side 33.
According to the illumination device of the present invention, the quantity of light output from the other end face 34 is about 50% or more of the quantity of light incident to the incident face, and thus it is possible to sufficiently increase the width read by the electronic light receiving element.

While the present invention has been shown and described with reference to certain exemplary embodiments thereof, it will be understood by those skilled in the art that various changes in form and details may be made therein without departing from the spirit and scope of the invention as defined by the appended claims. It is aimed, therefore, to cover in the appended claim all such changes and modifications as fall within the true spirit and scope of the present invention.

## Claims

1. An illumination device comprising:
a light guide comprising: an outer peripheral face; one end face; and the other end face, wherein a groove is formed in the outer peripheral face along a longitudinal direction of the light guide;
a light source provided to face the one end face of the light guide; and
a diffusion reflector provided to face the other face of the light guide.

2. The illumination device according to Claim 1, wherein the light guide and the diffusion reflector are separated from each other.

3. An illumination device comprising:
a light guide comprising: an outer peripheral face; one end face; and the other end face, wherein a groove is formed in the outer peripheral face along a longitudinal direction of the light guide; and
a light source provided to face the one end face of the light guide,
wherein an unevenness is formed on the other end face of the light guide.

4. The illumination device according to Claim **3**, further comprising:
a specular reflector that is opposed to the other end face of the light guide.

5. The illumination device according to Claim 1,
wherein the diffusion reflector is formed of a transparent member and granular particles enclosed in the transparent member.

6. The illumination device according to Claim **1**,
wherein the diffusion reflector is formed of only white particles.

7. The illumination device according to Claim **1**,
wherein the diffusion reflector is formed of a transparent member on which unevenness is formed to face the other face of the light guide.

8. The illumination device according to Claim **1**,
wherein the light source is a light emitting diode (LED).
